# EUROPEAN PATENT SPECIFICATION

(11) **EP 3 893 701 B1**
(45) Date of publication and mention of the grant of the patent: **20.08.2025**
(21) Application number: 19842840.1
(22) Date of filing: 09.12.2019
(51) Int. Cl.: A47J 31/06, A47J 31/16, A47J 31/30, B01D 39/12

(54) **PLATE FILTER FOR A MOKA COFFEE MAKER, AND MOKA COFFEE MAKER INCLUDING SAID FILTER**
PLATTENFILTER FÜR MOKA-KAFFEEMASCHINEN UND MOKA-KAFFEEMASCHINE MIT BESAGTEM FILTER
FILTRE PLAT DESTINÉ À DES CAFETIÈRES MOKA, ET CAFETIÈRES MOKA COMPRENANT LEDIT FILTRE

(30) Priority: 11.12.2018 IT 201800003914 U
(43) Date of publication of application: 20.10.2021
(73) Proprietor: Luigi Lavazza S.p.A., 10152 Torino (IT)
(72) Inventor: ARCANGELI, Marcello, 10152 Torino (IT)
(74) Representative: Buzzi, Notaro & Antonielli d'Oulx S.p.A.
(86) International application number: PCT/IB2019/060556
(87) International publication number: WO 2020/121153

(56) References cited:
- WO-A1-2016/103289
- DE-U1- 29 707 092
- IT-A1- MO20 060 030

## Description

### Field of the invention

The present invention relates to the sector of coffee makers and the like and has been developed with particular reference to plate filters. The invention finds a preferred application in relation to coffee makers of a moka type.

### Prior art

Operation of coffee makers, as well as of similar devices for preparing of beverages starting from water and ground coffee, is usually based upon provision of filtering systems, aimed at preventing the final beverage from containing solid residue of the ground coffee. For this purpose, many coffee makers comprise two main bodies, namely, a boiler body, which is filled with the water to be heated, and a collector body for collecting the brewed coffee, these two bodies being operatively connected in fluid communication, with the filtering means set in between.

In the case of coffee makers of a moka type, the aforesaid filtering means typically comprise a filter funnel, having an upper part that is shaped for containing a dose of ground coffee and a lower part that is shaped for drawing the water from the boiler body and for enabling the pressurized water to rise from the boiler body towards the collector body. The latter has, within its cavity, a central column (chimney) having in general two lateral upper opening, from which the beverage obtained can come out thanks to passage of the pressurized water through the dose of coffee.

The filtering means of the coffee maker typically also comprise a plate filter (also known as "plate filter"), mounted on the collector body upstream of the aforesaid column and designed to face the dose of coffee contained in the upper part of the filter funnel. The plate filter has apertures or holes that are traversed by the pressurized water immediately after it has passed through the dose of ground coffee. The dimensions of the holes are chosen so as to prevent the ground coffee from being entrained by the water through the column, and hence from reaching the cavity of the collector body into which the beverage finally flows.

It has been found that the taste of the coffee beverage that reaches the cavity of the collector body of a coffee maker frequently has the tendency to worsen in the course of the preparation process.

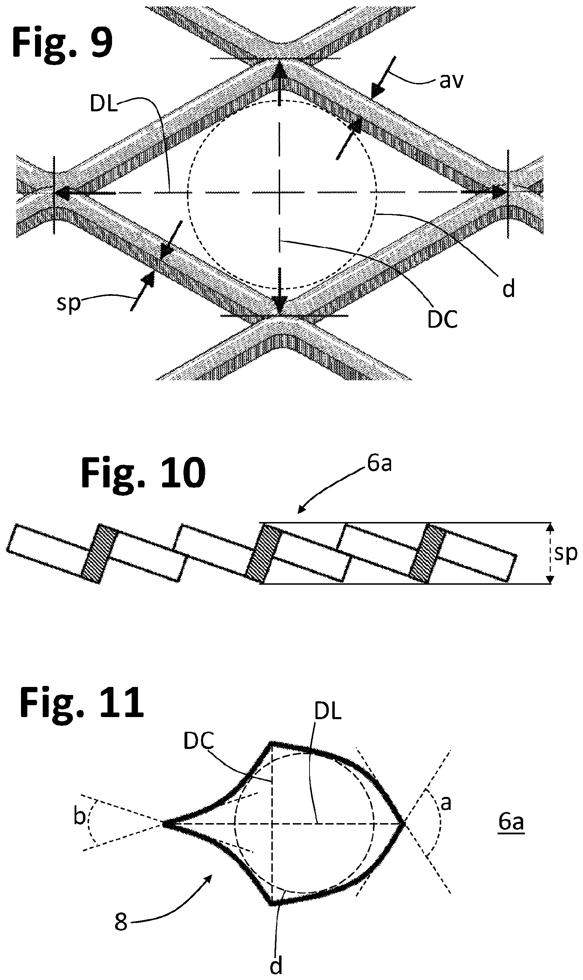

Amongst the various solutions proposed in the past to mitigate this drawback, i.e., to increase the portion of beverage with a pleasant taste, there is that of obtaining the plate filter by cutting and shaping in an appropriate way a metal screen with given characteristics. In this connection, known from WO 2016/103289 A1 is, for example, a plate filter obtained in the way referred to, using metal screens made of aluminium or steel that - with reference also to Figure 9 for the nomenclature used - meet the following specific requisites, determined according to the DIN 791 standard:
- long way of mesh pitch or major diagonal (DL): from 2 mm to 10 mm, in particular from 3 mm to 7 mm, even more in particular from 4 mm to 6 mm;
- short way of mesh pitch or minor diagonal (DC): from 0.1 mm to 5 mm, in particular from 0.5 mm to 3 mm, even more in particular from 0.6 mm to 1 mm, and more preferably still from 0.7 mm to 0.9 mm;
- strand width (av): from 0.1 mm to 15 mm, in particular from 0.2 mm to 3 mm, even more in particular from 0.2 mm to 0.8 mm;
- percentage of open area: from 15% to 90%, in particular from 50% to 80%, even more in particular from 60% to 70%.

### Aim and summary of the invention

In view of the above prior art, the aim of the present invention is basically to provide a newly devised plate filter that is able to improve further the quality of the coffee beverage that can be obtained with a moka coffee maker.

The above aim is achieved, according to the present invention, by a plate filter for moka coffee makers having the characteristics specified in Claim 1. Further advantageous developments of the invention are specified in the dependent Claims 2-14. The aim of the invention is moreover achieved by moka coffee makers that include such a plate filter, according to Claim 15. The claims form an integral part of the technical teaching provided herein in relation to the invention.

### Brief description of the drawings

Further aims, characteristics, and advantages of the invention will emerge clearly from the ensuing detailed description, with reference to the annexed drawings, in which:
- Figure 1 is a schematic representation in partial cross-sectional view of a coffee maker of a moka type;
- Figure 2 is a schematic view in side elevation of a plate filter according to possible embodiments of the invention;
- Figures 3 and 4 are schematic perspective views from different angles of a plate filter according to possible embodiments of the invention;
- Figure 5 is a schematic top plan view of a plate filter according to possible embodiments of the invention;
- Figure 6 is a schematic cross-sectional view of a plate filter according to possible embodiments of the invention;
- Figure 7 is a detail of Figure 5 at a larger scale;
- Figure 8 is a schematic representation of a portion of a plate filter according to possible embodiments of the invention;
- Figure 9 is a schematic representation of a portion of a generic plate filter, with indication of corresponding characteristic parameters;
- Figure 10 is a representation in lateral section of a portion of a plate filter according to possible embodiments of the invention; and
- Figure 11 is a schematic representation aimed at exemplifying the profile of an aperture or hole of a plate filter according to possible embodiments of the invention.

### Description of preferred embodiments of the invention

Reference to "an embodiment" or "one embodiment" in the framework of the present description is intended to indicate that a particular configuration, structure, or characteristic described in relation to the embodiment is comprised in at least one embodiment. Hence, phrases such as "in an embodiment", "in one embodiment", and the like, that may be present in different points of this description do not necessarily refer to one and the same embodiment. Moreover, particular conformations, structures, or characteristics may be combined in any adequate way in one or more embodiments. The references used herein are only provided for convenience and hence do not define the sphere of protection or the scope of the embodiments.

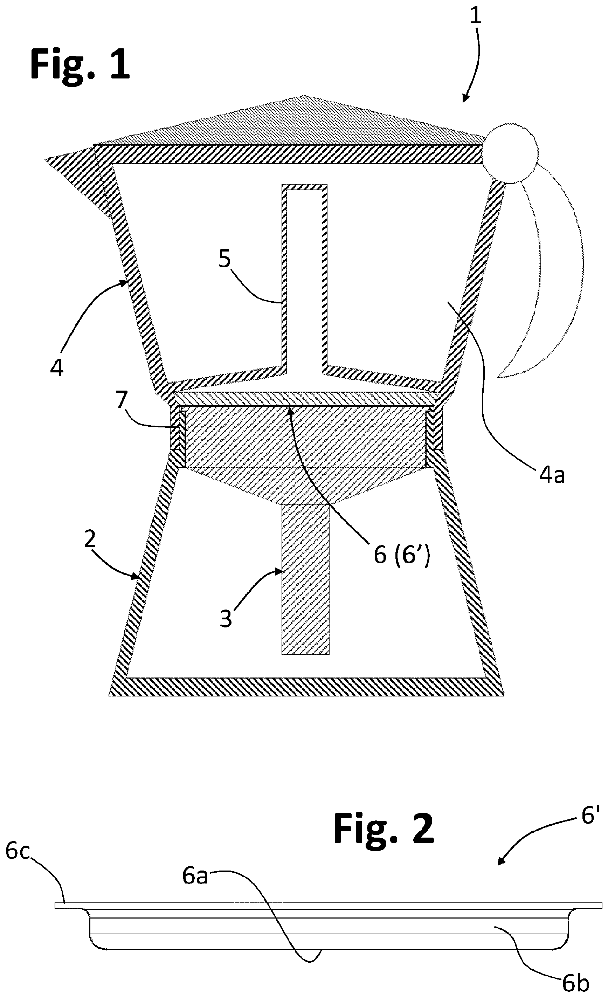

Figure 1 shows in an extremely schematic way a coffee maker, designated as a whole by 1. In the example represented, the coffee maker 1 is of a moka type and comprises a boiler body 2 having an upper mouth, for receiving the water to be heated necessary for preparation of a coffee beverage. The boiler body 2 is laterally provided with a usual safety (or pressure-relief) valve, not shown.

The upper mouth of the boiler body 2 is shaped so as to define a seat for positioning a filter funnel 3, which is configured for containing a dose of ground coffee, in bulk form or in a compacted form (cake), or else contained in a porous pod, for example made of filter paper. The coffee maker 1 further comprises an upper collector body 4, which is configured for being coupled in fluid communication with the boiler 2 and defines a cavity 4a for collection of the beverage, extending at the centre of which is a delivery chimney or column 5.

The base part of the collector body 4 defines a housing, mounted in which is a plate filter 6, with possible peripheral seal means, such as an annular gasket, not represented. According to a technique in itself known, the plate filter 6 is mounted in a fixed position, but, if need be, can be removed from its housing, for example for replacement thereof.

As also already mentioned in the introductory part of the present description, typical use of the coffee maker 1 envisages loading into the boiler body 2 the water necessary for preparation of the coffee beverage. Next, the filter funnel 3 is set in the corresponding seat defined at the mouth of the boiler body 2, and the upper part of the funnel 3 is filled with the dose of ground coffee. The upper collector body 4 can then be secured to the boiler body 1, in particular via a threaded coupling 7, with the plate filter 6 facing the dose of coffee. Subsequent heating of the boiler body 2 will cause passage of the hot pressurized water through the filter funnel 3, through the dose of coffee contained therein, and through the plate filter 6: the coffee beverage thus obtained climbs up the column 5 and then comes out into the cavity 4A of the collector body 4.

The delivery process may be considered as being divided into two phases. In the first phase, also known as "regular extraction", there is start of delivery, i.e., of passage of water from the boiler body 2 to the collector body 4, at a very low pressure (approximately, 0.1 to 0.2 bar) and at a temperature of around 55/60°C. In this phase, the ground coffee of the dose contained in the filter funnel 3 tends to rise entrained by the water towards the column 5 of the collector body 4, thus distributing in part on the plate filter 6.

In the second phase of the process, also known as "forced extraction", the water continues to pass through the ground coffee present in the filter funnel 3, but may encounter a little more resistance due to the presence of the ground coffee on the plate filter 6 following upon the first phase. This resistance is higher if in the filter funnel 3 an excessive dose of coffee has been introduced such as to cause compression thereof between the filter funnel 3 and the plate filter 6. The pressure of the water can hence rise decidedly as compared to the first phase (up to 0.8 to 1.5 bar according to the amount and grain size of the coffee), with a consequent rise in temperature of the extracted product, which may even reach values of between 85°C and 100° C: this causes a very intense evaporation, which may lead to a sharp, bitter, or sour taste of the coffee beverage.

The invention is based upon the consideration of the fact that, to obtain a correct extraction with a coffee maker, in particular a moka pot, it would be necessary to respect the air-to-water ratios of the boiler body, normally defined in the instructions accompanying the coffee maker, and not to press the coffee down inside the filter funnel. In practice, however, these instructions are rarely followed by the end consumer since - in the majority of cases - the water is introduced into the boiler body in excess (typically above the level of the corresponding safety valve) and/or the ground coffee is introduced in an excessive amount in the filter funnel (the classic "heap" of coffee, which is then compressed when the boiler body and the collector body are coupled together).

To enable a delivery at optimal temperatures, i.e., not beyond 80°C, preferably comprised between 75°C and 78°C, the invention proposes to intervene on the filtering system of the coffee maker and, more precisely, on the plate filter mounted on the collector body, without having to intervene radically on the extraction system, at the same time preventing passage of fine particles of ground coffee.

According to the invention, the sections of passage of the fluid through the plate filter have been modified in order to obtain reduction of the pressures and temperatures of the extracted product, and further withhold the fine coffee particles.

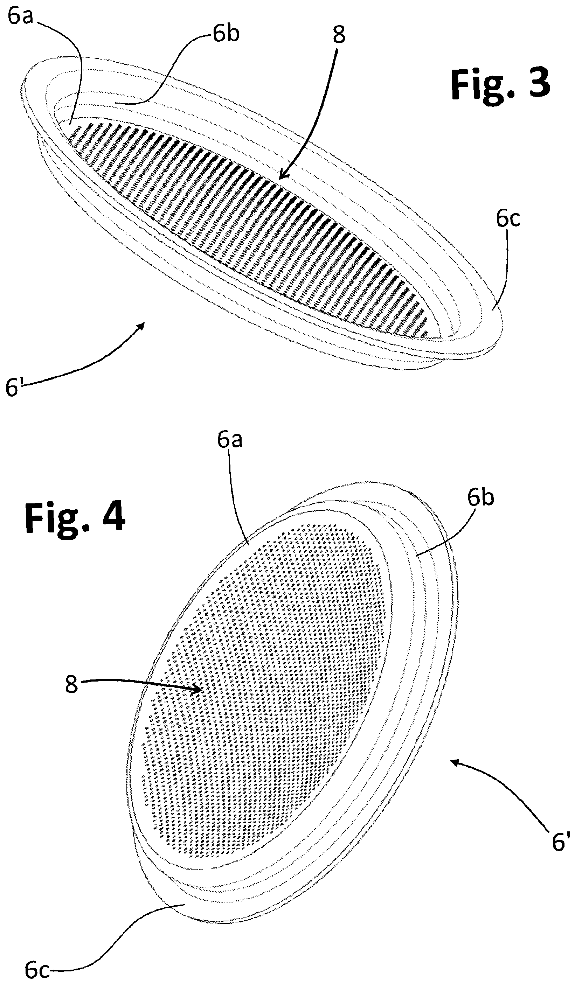

Figures 2-5 represent schematically a plate filter provided according to possible embodiments of the invention. In the example, the plate filter - designated as a whole by 6' - has a bottom or filtering wall 6a, preferably substantially circular, which is provided with an array of holes or apertures 8. The holes 8 define as a whole an empty or open area that is a fraction of the total area of the wall 6a that is to face the filter funnel, i.e., the dose of ground coffee. In the case exemplified, the body of the plate filter 6' is shaped so as to define also a peripheral wall 6b. In the example, the peripheral wall 6b has, at its end opposite to the filtering wall 6a, a flange 6c radially projecting outwards. The flange 6c is advantageously used for fixing the plate filter 6', in position together with an annular gasket, not represented.

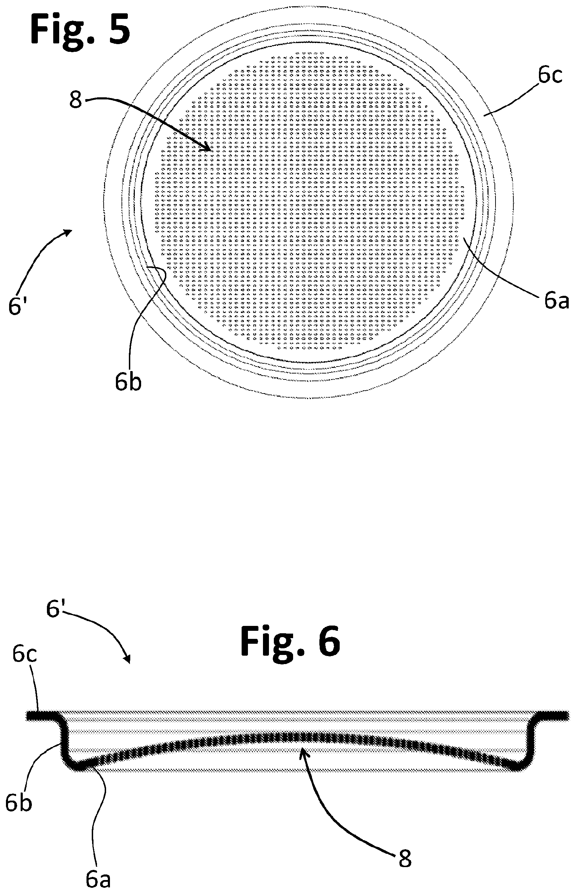

As visible in particular in Figure 6, the filtering wall 6a is preferably dome-shaped, with the concavity of the dome shape that - in the assembled condition of the coffee maker - is directed towards the corresponding boiler body, or the filter funnel. The choice of this conformation does not in any case have an imperative nature, in so far as the plate filter 6' could have, for example, a filtering wall 6a with a concavity opposite to the one represented, or else a plane or substantially plane filtering wall 6a.

With reference once again to Figure 9 for the nomenclature used - the mesh structure of the plate filter 6' , i.e., of the filtering wall 6a, has a long way of mesh pitch or major diagonal (DL) of less than 2 mm; in particular, according to the invention, said major diagonal (DL) is comprised between 0.6 and 1 mm (± 5%).

Preferably, moreover, the empty or open area of the filtering wall 6a is not less than 25% (± 5%) of the total area of the wall or of its part that is to face the dose of coffee, or the corresponding containment space defined by the filter funnel. The empty or open area of the wall 6a may in any case be more than 25%.

The short way of mesh pitch or minor diagonal (DC) is preferably not greater than 1 mm, in particular comprised between 0.4 and 0.8 mm (± 5%). The holes 8 overall define as a substantially mesh-like structure having a strand width (av) that is preferably not greater than 0.3 mm, in particular comprised between 0.20 and 0.25 mm (± 5%). The filtering wall 6a of the plate filter 6' has a thickness preferably not greater than 0.3 mm, in particular comprised between 0.15 and 0.25 mm (± 5%).

The preferred material used for production of the plate filter according to the invention is stainless steel, for example of the AISI 304L type, though not excluded is the use of other materials, such as aluminium.

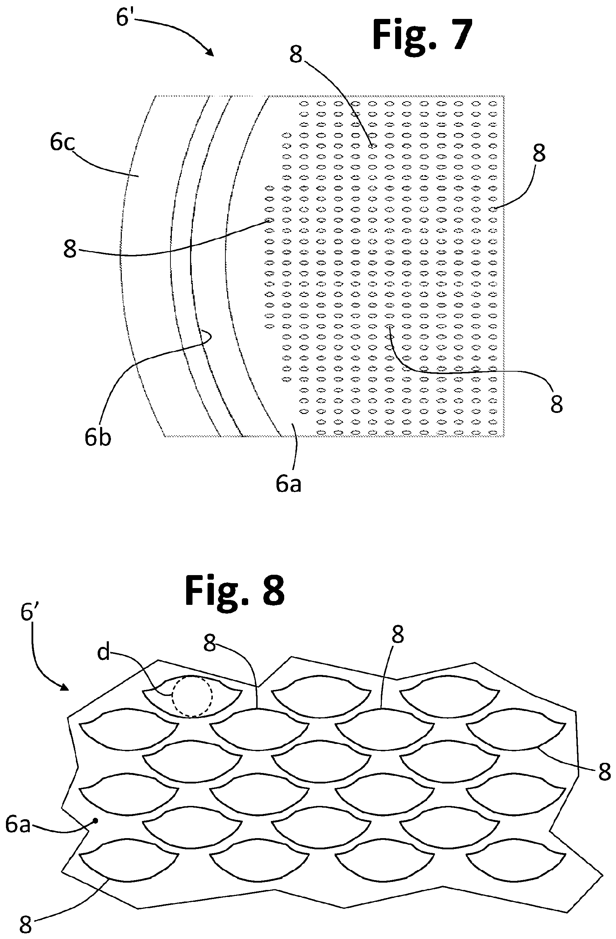

Figure 8 illustrates in a schematic way a portion of the perforated filtering wall 6a of a plate filter according to the invention, visible in which is a possible geometry of the holes or apertures 8. As may be noted, in various embodiments, the holes 8 have at least one side generally curved or rounded.

According to the invention, the curvatures of one or more sides of the holes 8 vary, in particular as a function of the distance the hole considered from the centre of the filtering wall 6a. This characteristic may prove particularly useful in the case of coffee makers of a moka type in order to direct the flow of water towards the inlet of the column 5 of the collector body 4 with a relatively swirling motion.

Irrespective of the specific shape of the holes or apertures 8, their profile is preferably such that it is possible to inscribe a circle therein with a diameter not greater than 0.3 mm, in particular comprised between 0.15 and 0.25 mm (± 5%).

It is moreover particularly advantageous for the holes 8 of the filtering wall 6a to be obtained via laser cutting. This characteristic simplifies production of the filtering wall 6a starting from plane sheet metal, in view of the small dimensions of the holes 8 and/or their geometry.

Not, on the other hand, excluded is the possibility of obtaining the filtering wall 6a, for example, via calendering or stretching of plane sheet metal, so as to obtain, on a side of each hole or aperture 8, a fin inclined with respect to the aperture itself, as exemplified in Figure 10, preferably with an inclination comprised between 0° and 55°, preferably comprised between 1° and 30°, and even more preferably comprised between 2° and 10°.

Practical tests conducted by the present Applicant have shown how the plate filter according to the invention enables the aims set forth to be achieved.

For this purpose, a plate filter 6' having a geometry of the type represented in Figures 2-7 was obtained starting from a plate of AISI 304L stainless steel, with a starting thickness approximately 0.15 mm ± 5%. The plate was machined in order to form the corresponding array of holes 8, with a mesh structure having the following characteristics, according to the DIN 791 standard and once again with reference to Figure 9 for the corresponding nomenclature:

| | |
|---|---|
| - major diagonal (DL): | 0.85 mm ± 5% |
| - minor diagonal (DC): | 0.65 mm ± 5% |
| - strand width (av): | 0.23 mm ± 5% |
| - final thickness (sp) | 0.20 mm ± 5% |
| - percentage of empty area | 25% ± 5% |
| - inscribed diameter (d) | 0.20 mm ± 5% |
| - weight of machined plate | 0.700 kg/m² ± 10% approx. |

The tests were conducted using two different moka pots, i.e., a coffee maker model "Carmencita" manufactured by the present Applicant in the standard configuration (Coffee maker 1) and a coffee maker model "Carmencita" manufactured by the present Applicant in a modified configuration, i.e., provided with a plate filter according to the invention (Coffee maker 2).

The pressures were measured with a glycerin manometer applied to the boiler body of the coffee makers. The temperatures of the beverage delivered were detected with a thermocouple located at the slits of the column of the coffee maker. The water introduced at the beginning into the boiler body was at a temperature of 18°C.

As heat source a gas burner with a diameter of 70 mm was used at a constant power of 1.15 NL/S. To compare the various parameters with the two moka pots, four different commercially available coffee blends of different producers were used (BLEND 1, BLEND 2, BLEND 3, BLEND 4).

The results of the tests with the two coffee makers are highlighted in the tables below.

**TABLE 1**

| Tests conducted with standard Lavazza coffee maker | | | | | | | | | | | | |
|---|---|---|---|---|---|---|---|---|---|---|---|---|
| **COFFEE MAKER 1** | **BLEND 1** | | | **BLEND 2** | | | **BLEND 3** | | | **BLEND 4** | | |
| Test No. | 1 | 2 | 3 | 4 | 5 | 6 | 7 | 8 | 9 | 10 | 11 | 12 |
| Q water (cc) | 15 | 15 | 15 | 15 | 15 | 15 | 15 | 15 | 15 | 15 | 15 | 15 |
| Q ground coffee (g) | 126 | 126 | 128 | 124 | 125 | 126 | 125 | 130 | 128 | 126 | 125 | 128 |
| Temperature (°C) | **88** | **90** | **90** | **92** | **90** | **89** | **93** | **92** | **90** | **89** | **91** | **89** |
| Pressure (bar) | **0.8** | **0.9** | **1** | **0.9** | **0.8** | **0.8** | **1.3** | **1.5** | **1.2** | **0.9** | **0.8** | **0.8** |

**TABLE 2**

| Tests conducted with Lavazza coffee maker according to the invention | | | | | | | | | | | | |
|---|---|---|---|---|---|---|---|---|---|---|---|---|
| **COFFEE MAKER 2** | **BLEND 1** | | | **BLEND 2** | | | **BLEND 3** | | | **BLEND 4** | | |
| Test No. | 1 | 2 | 3 | 4 | 5 | 6 | 7 | 8 | 9 | 10 | 11 | 12 |
| Q water (cc) | 15 | 15 | 15 | 15 | 15 | 15 | 15 | 15 | 15 | 15 | 15 | 15 |
| Q ground coffee (g) | 128 | 124 | 128 | 127 | 125 | 128 | 125 | 126 | 124 | 130 | 127 | 125 |
| Temperature (°C) | **75** | **77** | **77** | **74** | **76** | **75** | **78** | **80** | **80** | **76** | **75** | **75** |
| Pressure (bar) | **0.6** | **0.7** | **0.7** | **0.5** | **0.7** | **0.7** | **0.9** | **1** | **1** | **0.7** | **0.7** | **0.6** |

From the comparison between the results of the two tables it clearly emerges how, irrespective of the type of blend used, the temperatures and pressures of the extract obtained with the coffee maker provided with the plate filter according to the invention are decidedly lower than the corresponding values obtained with the standard coffee maker.

The mean values of temperature and pressure appear in the table below.

**TABLE 3**

| Mean values of temperature and pressure | | |
|---|---|---|
| **Coffee maker** | **Mean temperature** | **Mean pressure** |
| COFFEE MAKER 1 | 90.2 | 0.88 |
| **COFFEE MAKER 2** | **76.5** | **0.73** |

It is again pointed out how the coffee beverages obtained with the two machines were both substantially immune of residue of ground coffee.

From the description provided the characteristics of the present invention consequently emerge clearly, as likewise do its advantages. In particular, the sections of passage proposed for the plate filter according to the invention make it possible to obtain a significant reduction of the pressures and temperatures of the extracted coffee beverage, at the same time guaranteeing that the fine coffee particles will be withheld.

It is clear that numerous variations may be made by the person skilled in the art to the delivery device described by way of example, without thereby departing from the scope of the invention as defined in the ensuing claims.

Figure 11 illustrates by way of example a possible geometry of holes or apertures that can be used in a plate filter according to the invention, different from the one exemplified in Figure 8. In this case, the hole 8 represented has four generally curved sides, arranged in pairs according to an axis of symmetry, here substantially corresponding to the long way or major diagonal DL, and with equal sides specular with respect to the aforesaid axis or diagonal that form, at one end of the hole 8, an internal angle "a" greater than 90° and, at the opposite end, an internal angle "b" smaller than 90°, the other two angles that identify the short way or minor diagonal DC being substantially the same as one another. As already mentioned, curved or rounded sides of the type exemplified have the effect of inducing a sort of rotation of the flow at outlet from the plate filter, and a consequent relatively swirling motion. Holes 8 having the geometry exemplified in Figure 11 may, for example, be defined on the filtering wall 6a according to concentric circumferences with progressively decreasing radius, in particular with the minor diagonal (DC) substantially facing the centre of the aforesaid wall.

## Claims

1. A plate filter for moka coffee makers , comprising a filtering wall (6a) having a centre and being provided with a plurality of apertures or holes (8) that define as a whole a substantially mesh-like structure having, according to the DIN 791 standard, a long side of mesh pitch or major diagonal (DL) that is less than 2 mm ± 5%, whereby .
- said long side of mesh pitch or major diagonal (DL) is comprised between 0.6 and 1 mm ± 5%,
- the apertures or holes (8) of the plurality have at least one side generally curved or rounded,
- the curvature of the at least one side of the holes (8) of the plurality varies in order to direct the flow of water towards said centre with a swirling motion.

2. The plate filter according to Claim 1, wherein said long side of mesh pitch or major diagonal (DL) is of 0.85 mm ± 5%.

3. The plate filter according to Claim 1, wherein the substantially mesh-like structure has, according to the DIN 791 standard, a short way of mesh pitch or minor diagonal (DC) that is not greater than 1 mm ± 5%, preferably comprised between 0.4 and 0.8 mm ± 5%.

4. The plate filter according to Claim 3, wherein said short way of mesh pitch or minor diagonal (DC) is of 0.65 mm ± 5%.

5. The plate filter according to Claim 1 or Claim 2, wherein the holes (8) of the plurality have a profile such that a circle can be inscribed therein with a diameter not greater than 0.3 mm ± 5%, preferably comprised between 0.15 mm and 0.25 mm ± 5%, even more preferably of 0.20 mm ± 5%.

6. The plate filter according to any one of Claims 1-5, wherein the plurality of holes (8) defines an empty or open area of the filtering wall (6a) that is not less than 25% (± 5%) of the total area of said wall or at least of its part designed to face a dose of ground coffee.

7. The plate filter according to any one of Claims 1-6, wherein the substantially mesh-like structure has, according to the DIN 791 standard, a strand width (av) not greater than 0.3 mm ± 5%, preferably comprised between 0.20 and 0.25 mm ± 5%, even more preferably of 0.23 mm ± 5%.

8. The plate filter according to any one of Claims 1-7, wherein the filtering wall (6a) has a thickness (sp) not greater than 0.3 mm ± 5%, preferably comprised between 0.15 and 0.25 mm ± 5%, even more preferably of 0.20 mm ± 5%.

9. The plate filter according to any one of Claims 1-8, wherein the plate filter (6') is made of stainless steel, in particular AISI 304L steel.

10. The plate filter according to Claim 1, wherein the curvature of the at least one side of the holes (8) of the plurality varies as a function of the distance of the holes from the centre of the filtering wall (6a).

11. The plate filter according to any one of Claims 1-10, wherein the holes (8) of the plurality have four generally curved sides, arranged in pairs according to an axis of symmetry identified by a respective long way of mesh pitch or major diagonal (DL), with equal sides specular with respect to said axis that form, at one end of the respective hole (8), an internal angle (a) greater than 90° and, at the opposite end, an internal angle (b) smaller than 90°, the other two internal angles that identify a short way of mesh pitch or minor diagonal (DC) being substantially the same as one another.

12. The plate filter according to any one of Claims 1-11, wherein the filtering wall (6a) is a dome-shaped wall.

13. The plate filter according to any one of Claims 1-12, further comprising a peripheral wall (6b) that is preferably provided, at one end thereof opposite to the filtering wall (6a), with a flange (6c) radially projecting outwards.

14. The plate filter according to any one of Claims 1-13, wherein the filtering wall (6a) has, at one side of each hole (8), an inclined fin, preferably with an inclination comprised between 0° and 55°, preferably comprised between 1° and 30°, and even more preferably comprised between 2° and 10°.

15. A coffee maker of a moka type, comprising a boiler body (2) and a collector body (4) that can be coupled in a fluid-tight way to one another, with filtering means (3, 6') set in between that comprise a filter funnel (3) and a plate filter (6') according to any one of Claims 1-14.

## Patentansprüche

1. Plattenfilter für Mokka-Kaffeemaschinen, umfassend eine Filterwand (6a), die eine Mitte aufweist und mit einer Vielzahl von Öffnungen oder Löchern (8) versehen ist, die als Ganzes eine im Wesentlichen maschenartige Struktur definieren, die gemäß der Norm DIN 791 einen langen Weg der Maschenteilung oder eine Hauptdiagonale (DL) aufweist, die kleiner ist als 2 mm ±5 %, wobei
- der lange Weg der Maschenteilung oder die Hauptdiagonale (DL) zwischen 0,6 und 1 mm ±5 % ist,
- die Öffnungen oder Löcher (8) der Vielzahl mindestens eine Seite aufweisen, die im Allgemeinen gekrümmt oder gerundet ist,
- die Krümmung der mindestens einen Seite der Löcher (8) der Vielzahl variiert, um den Wasserstrom mit einer Wirbelbewegung in Richtung der Mitte zu lenken.

2. Plattenfilter nach Anspruch 1, wobei der lange Weg der Maschenteilung oder die Hauptdiagonale (DL) 0,85 mm ±5 % ist.

3. Plattenfilter nach Anspruch 1, wobei die im Wesentlichen maschenartige Struktur gemäß der Norm DIN 791 einen kurzen Weg der Maschenteilung oder eine Nebendiagonale (DC) aufweist, die nicht größer ist als 1 mm ±5 %, vorzugsweise zwischen 0,4 und 0,8 mm ±5 %.

4. Plattenfilter nach Anspruch 3, wobei der kurze Weg der Maschenteilung oder die Nebendiagonale (DC) 0,65 mm ±5 % ist.

5. Plattenfilter nach Anspruch 1 oder 2, wobei die Löcher (8) der Vielzahl ein Profil aufweisen, so dass ein Kreis mit einem Durchmesser von nicht mehr als 0,3 mm ±5 %, vorzugsweise zwischen 0,15 mm und 0,25 mm ±5 %, besonders bevorzugt von 0,20 mm ±5 %, darin einbeschrieben werden kann.

6. Plattenfilter nach einem der Ansprüche 1 bis 5, wobei die Vielzahl von Löchern (8) eine leere oder offene Fläche der Filterwand (6a) definieren, die nicht kleiner ist als 25 % (15 %) der Gesamtfläche der Wand oder mindestens ihres Teils, der ausgelegt ist, um einer Dosis gemahlenen Kaffees zugewandt zu sein.

7. Plattenfilter nach einem der Ansprüche 1 bis 6, wobei die im Wesentlichen maschenartige Struktur gemäß der Norm DIN 791 eine Strangbreite (av) von nicht mehr als 0,3 mm ±5 %, vorzugsweise zwischen 0,20 und 0,25 mm ±5 %, besonders bevorzugt von 0,23 mm ±5 %, aufweist.

8. Plattenfilter nach einem der Ansprüche 1 bis 7, wobei die Filterwand (6a) eine Dicke (sp) von nicht mehr als 0,3 mm ±5 %, vorzugsweise zwischen 0,15 und 0,25 mm ±5 %, besonders bevorzugt von 0,20 mm ±5 %, aufweist.

9. Plattenfilter nach einem der Ansprüche 1 bis 8, wobei der Plattenfilter (6') aus Edelstahl hergestellt ist, insbesondere Stahl AISI 304L.

10. Plattenfilter nach Anspruch 1, wobei die Krümmung der mindestens einen Seite der Löcher (8) der Vielzahl als eine Funktion des Abstands der Löcher von der Mitte der Filterwand (6a) variiert.

11. Plattenfilter nach einem der Ansprüche 1 bis 10, wobei die Löcher (8) der Vielzahl vier im Allgemeinen gekrümmte Seiten aufweisen, die paarweise gemäß einer Symmetrieachse angeordnet sind, die durch einen jeweiligen langen Weg der Maschenteilung oder eine Hauptdiagonale (DL) identifiziert ist, mit gleichen Seiten spiegelbildlich in Bezug auf die Achse, die an einem Ende des jeweiligen Lochs (8) einen Innenwinkel (a) größer als 90° und am entgegengesetzten Ende einen Innenwinkel (b) kleiner als 90° ausbilden, wobei die anderen zwei Innenwinkel, die einen kurzen Weg der Maschenteilung oder eine Nebendiagonale (DC) identifizieren, im Wesentlichen gleich sind.

12. Plattenfilter nach einem der Ansprüche 1 bis 11, wobei die Filterwand (6a) eine kuppelförmige Wand ist.

13. Plattenfilter nach einem der Ansprüche 1 bis 12, weiterhin umfassend eine Außenwand (6b), die vorzugsweise an einem Ende davon, das der Filterwand (6a) gegenüberliegt, mit einem Flansch (6c) versehen ist, der radial nach außen vorsteht.

14. Plattenfilter nach einem der Ansprüche 1 bis 13, wobei die Filterwand (6a) an einer Seite jedes Lochs (8) eine geneigte Finne aufweist, vorzugsweise mit einer Neigung zwischen 0° und 55°, vorzugsweise zwischen 1° und 30° und besonders bevorzugt zwischen 2° und 10°.

15. Kaffeemaschine vom Mokka-Typ, umfassend einen Kesselkörper (2) und einen Sammelkörper (4), die fluiddicht miteinander verbunden werden können, wobei dazwischen ein Filtermittel (3, 6') eingesetzt ist, das einen Filtertrichter (3) und einen Plattenfilter (6') nach einem der Ansprüche 1 bis 14 umfasst.

## Revendications

1. Plaque filtrante pour cafetières moka, comprenant une paroi filtrante (6a) ayant un centre et étant pourvue d'une pluralité d'orifices ou de trous (8) qui définissent ensemble une structure sensiblement en forme de grille ayant, conformément à la norme DIN 791, un grand côté de pas de maille ou grande diagonale (DL) qui fait moins de 2 mm ± 5 %, moyennant quoi
- ledit grand côté de pas de maille ou grande diagonale (DL) est compris entre 0,6 et 1 mm ± 5 %,
- les orifices ou trous (8) de la pluralité comportent au moins un côté généralement incurvé ou arrondi,
- la courbure de l'au moins un côté des trous (8) de la pluralité varie afin de diriger l'écoulement d'eau vers ledit centre avec un mouvement tourbillonnant.

2. Plaque filtrante selon la revendication 1, dans laquelle ledit grand côté de pas de maille ou grande diagonale (DL) fait 0,85 mm ± 5 %.

3. Plaque filtrante selon la revendication 1, dans laquelle la structure sensiblement en forme de grille a, conformément à la norme DIN 791, un petit côté de pas de maille ou petite diagonale (DC) qui ne fait pas plus de 1 mm ± 5 %, de préférence compris entre 0,4 et 0,8 mm ± 5 %.

4. Plaque filtrante selon la revendication 3, dans laquelle ledit petit côté de pas de maille ou petite diagonale (DC) fait 0,65 mm ± 5 %.

5. Plaque filtrante selon la revendication 1 ou la revendication 2, dans laquelle les trous (8) de la pluralité ont un profil tel qu'un cercle peut y être inscrit avec un diamètre ne dépassant pas 0,3 mm ± 5 %, de préférence compris entre 0,15 mm et 0,25 mm ± 5 %, mieux encore de 0,20 mm ± 5 %.

6. Plaque filtrante selon l'une quelconque des revendications 1 à 5, dans laquelle la pluralité de trous (8) définit une zone vide ou ouverte de la paroi filtrante (6a) qui ne représente pas moins de 25 % (± 5 %) de la superficie totale de ladite paroi ou au moins de sa partie conçue pour faire face à une dose de café moulu.

7. Plaque filtrante selon l'une quelconque des revendications 1 à 6, dans laquelle la structure sensiblement en forme de grille a, conformément à la norme DIN 791, une largeur de barre (av) ne dépassant pas 0,3 mm ± 5 %, de préférence comprise entre 0,20 et 0,25 mm ± 5 %, mieux encore de 0,23 mm ± 5 %.

8. Plaque filtrante selon l'une quelconque des revendications 1 à 7, dans laquelle la paroi filtrante (6a) a une épaisseur (sp) ne dépassant pas 0,3 mm ± 5 %, de préférence comprise entre 0,15 et 0,25 mm ± 5 %, mieux encore de 0,20 mm ± 5 %.

9. Plaque filtrante selon l'une quelconque des revendications 1 à 8, la plaque filtrante (6') étant faite d'acier inoxydable, en particulier d'acier AISI 304L.

10. Plaque filtrante selon la revendication 1, dans laquelle la courbure de l'au moins un côté des trous (8) de la pluralité varie en fonction de la distance des trous depuis le centre de la paroi filtrante (6a).

11. Plaque filtrante selon l'une quelconque des revendications 1 à 10, dans laquelle les trous (8) de la pluralité comportent quatre côtés généralement incurvés, disposés par paires selon un axe de symétrie identifié par un grand côté de pas de maille ou grande diagonale (DL) respectif, avec des côtés égaux spéculaires par rapport audit axis qui forment, à une extrémité du trou respectif (8), un angle interne (a) supérieur à 90° et, à l'extrémité opposée, un angle interne (b) inférieur à 90°, les deux autres angles internes qui identifient un petit côté de pas de maille ou petite diagonale (DC) étant sensiblement identiques.

12. Plaque filtrante selon l'une quelconque des revendications 1 à 11, dans laquelle la paroi filtrante (6a) est une paroi en forme de dôme.

13. Plaque filtrante selon l'une quelconque des revendications 1 à 12, comprenant en outre une paroi périphérique (6b) qui est de préférence pourvue, à une extrémité de celle-ci à l'opposé de la paroi filtrante (6a), d'une collerette (6c) se projetant radialement vers l'extérieur.

14. Plaque filtrante selon l'une quelconque des revendications 1 à 13, dans laquelle la paroi filtrante (6a) comporte, sur un côté de chaque trou (8), une ailette inclinée, de préférence avec une inclinaison comprise entre 0° et 55°, de préférence comprise entre 1° et 30°, et mieux encore comprise entre 2° et 10°.

15. Cafetière de type moka, comprenant un corps de chaudière (2) et un corps de collecteur (4) qui peuvent être assemblés de manière étanche aux fluides, avec des moyens de filtration (3, 6') placés entre eux qui comprennent un entonnoir filtrant (3) et une plaque filtrante (6') selon l'une quelconque des revendications 1 à 14.
